Europäisches Patentamt

European Patent Office

Office européen des brevets

(19)

(11) **EP 0 668 251 B1**

(12) **EUROPÄISCHE PATENTSCHRIFT**

(45) Veröffentlichungstag und Bekanntmachung des
Hinweises auf die Patenterteilung:
**15.01.1997 Patentblatt 1997/03**

(51) Int. Cl.$^6$: **C03C 15/02**

(21) Anmeldenummer: **95101442.2**

(22) Anmeldetag: **03.02.1995**

(54) **Verfahren und Vorrichtung zum Polieren oder Mattieren von Glasflächen in einem Polierbad**

Method and apparatus for polishing or matting glass surfaces in a polishing bath

Méthode et dispositif pour polir ou mater des surfaces en verre dans un bain de polissage

(84) Benannte Vertragsstaaten:
**AT FR GB IE**

(30) Priorität: **19.02.1994 DE 4405278**

(43) Veröffentlichungstag der Anmeldung:
**23.08.1995 Patentblatt 1995/34**

(73) Patentinhaber: **LABORATORIUM PROF. DR.
RUDOLF BERTHOLD GmbH & Co. KG
75323 Bad Wildbad (DE)**

(72) Erfinder:
• **Kappler, Gerhard
D-75378 Bad Liebenzell (DE)**

• **Seitz, Wolfgang
D-82276 Nassenhausen (DE)**
• **Unterreiner, Albert
D-83454 Anger (DE)**

(74) Vertreter: **Frank, Gerhard, Dipl.-Phys.
Patentanwälte
Mayer, Frank, Reinhardt,
Schwarzwaldstrasse 1A
75173 Pforzheim (DE)**

(56) Entgegenhaltungen:
**DE-A- 2 932 608**

**Beschreibung**

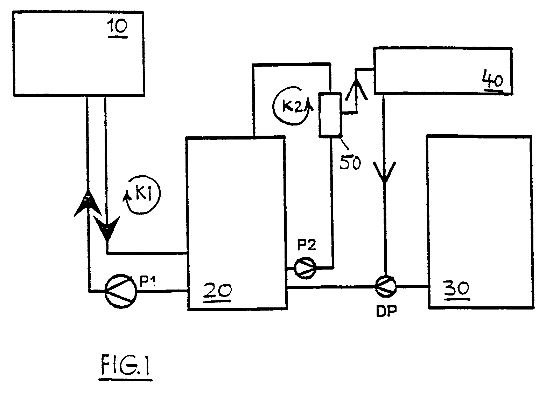

Glas, insbesondere Hohlglas, wird nach der Bearbeitung zur Polierung oder Mattierung der Oberfläche in einem Säurebad bewegt. Die Polierflüssigkeit besteht im wesentlichen aus ca. 1 bis 10 Gew.-% Flußsäure (HF), 60 bis 70 Gew.-% Schwefelsäure ($H_2SO_4$) und Wasser. Zum Polieren wird das zu polierende Gut in einen Polierbadbehälter gegeben. In das Polierbad wird aus dem Pufferbehälter mit der Pumpe P1 (s. Abb. 1) die Poliersäure gepumpt. Das zu polierende Material wird in dem Bad bewegt, um eine allseitig gleichmäßige Polierwirkung zu erzielen. Um Schmutzpartikel abzuspülen wird die Poliersäure in gewissen Zeitabständen abgelassen und das Bad mit Spülsäure gefüllt. Für eine Charge sind meist mehrere Polier- und Spülzyklen notwendig. Wenn der gewünschte Poliergrad erreicht ist, wird das Material entnommen und das Bad neu beschickt.

Zum Spülen wird Schwefelsäure mit einer Konzentration von ca. 60 bis 70 Gew.-% verwendet, um eine Verdünnung des Polierbades durch Wasserverschleppung aus vorgeschalteten Wasserbädern zu vermeiden. Der Schwefelsäureanteil in der Poliersäure dient zur Überführung der durch die Flußsäure gelösten Glasbestandteile in Sulfate und unterstützt die Polierwirkung. Eine weitere Funktion ist die Bindung des durch vorgeschaltete Waschbäder mit dem Poliergut eingeschleppten Wassers, das sonst eine Verdünnung der Flußsäure bewirken würde. Für den Glasabtrag zur Glättung der Oberfläche ist der Flußsäureanteil wichtig. Die Länge der Polierzeit und das Ergebnis des Polierens wird insbesondere von diesem Anteil bestimmt. Zur Kontrolle der Flußsäurekonzentration werden aus dem Polierbadbehälter (meist einer rotierenden Trommel), während eines kurzen Stillstandes ein oder mehrere Teile entnommen. Ist das Ergebnis zufriedenstellend, wird der Poliervorgang beendet, andernfalls wird er fortgesetzt. Eine unzureichende Polierwirkung ist ein Zeichen für eine zu geringe Flußsäurekonzentration. Die Flußsäurekonzentration wird dann durch manuelle Zugabe von hochkonzentrierter Flußsäure wieder erhöht.

Die Poliersäure weist eine Temperatur von ca. 60 bis 70 °C auf. Beim Öffnen der Trommel strömen sehr aggressive Säuredämpfe aus, die abgesaugt und neutralisiert werden müssen. Die Poliersäure selbst ist höchst aggressiv und verursacht schon in geringen Spuren Verätzungen der Haut. Ein Kontakt mit den Augen kann zur Erblindung führen. Die Gefahren und Belastungen für das Bedienungspersonal sind somit erheblich. Das führt bei manueller Handhabung dazu, daß meist zu großzügig Flußsäure zugegeben wird um ein Nachpolieren, wie es bei einem ungenügenden Polierergebnis notwendig wäre, zu vermeiden. Die Folgen sind erhöhter Flußsäureverbrauch, schwankende Polierzeiten, keine gleichbleibende Polierqualität, und ein erhöhter Anfall von Altsäure und dadurch eine Mehrbelastung der Abwasser- und Abluftneutralisation.

Aus den genannten Gründen ist eine automatische Bestimmung und Regelung der Säurekonzentration äußerst wünschenswert.

Der Schwefelsäureanteil läßt sich mit ausreichender Genauigkeit mit einer radiometrischen Dichtemessung bestimmen. Die Konzentration der Schwefelsäure ist mit 60 bis 70 Gew.- % relativ hoch und die Dichteänderung / Gew.-% $H_2SO_4$ ebenfalls. Störend wirkt sich der kontinuierlich ansteigende Anteil von unlöslichen Schwebstoffen, die ebenfalls einen Beitrag zur Dichteanzeige liefern, aus. Die Betriebserfahrung hat jedoch gezeigt, daß dieser Anstieg sehr gleichmäßig erfolgt, so daß sich der dadurch ergebende Beitrag zur Dichteerhöhung leicht von dem Dichtemeßwert subtrahieren läßt. Das sich dadurch ergebende Meßergebnis wird in vielen Fällen zur Kontrolle der Schwefelsäurekonzentration herangezogen.

Der Beitrag der Flußsäure zur Gesamtdichte ist wesentlich geringer. Die Dichteänderung / Gew.-% Konzentration ist nur ca. 1/4 von dem der Schwefelsäure. Bei einem Gemisch aus 65 Gew.-% $H_2SO_4$ und 5 Gew.-% HF werden ca. 97,5% der Dichteerhöhung gegenüber $H_2O$ durch den Schwefelsäureanteil und nur ca. 2,5% durch den Flußsäureanteil verursacht. Zur Bestimmung der Flußsäurekonzentration ist deshalb die Dichtemessung mit "zeitabhängiger Schwebstoffkorrektur" zu ungenau und deshalb nicht einsetzbar.

Beim gattungsbildenden Verfahren nach der DE-29 32 608 C2 wird durch Vergleichsmessungen ein Regelwert gewonnen, der eine begrenzte Automatisierung der Flußsäurebestimmung und Regelung der Flußsäureangabe grundsätzlich ermöglicht. Die Messungen einer radioaktiv markierten Referenzprobe bei "optimalem Säuregemisch" und die späteren Messungen der Vergleichsmuster unter aktuellen Säurekonzentrationen führen zu radioaktiv verunreinigten, aggressiven, abgelösten Säureresten, die in doppelter Hinsicht nur aufwendig zu entsorgen sind.

Es ist daher Aufgabe der Erfindung, das vorbekannte Verfahren insbesondere dahingehend zu verbessern, daß radioaktiver Abfall und die damit verbundenen Entsorgungsprobleme vermieden werden.

Erfindungsgemäß wird diese Aufgabe durch das Verfahren nach dem kennzeichnenden Teil des Patentanspruchs 1 bzw. eine Vorrichtung nach dem Kennzeichen des Patentanspruchs 3 gelöst.

Der Grundgedanke der Erfindung besteht darin, den Abtrag nicht vom radioaktiv markierten Vergleichsmuster zu messen, was zum radioaktiv verseuchten Abfall führt, sondern die Dickenänderung einer nicht markierten Glasplatte direkt mit einer externen Strahlenquelle zu bestimmen.

Die hierzu verwendeten Komponenten sind mechanisch robust, zum Beispiel können zum Durchpumpen der Poliersäure durch die Kreisläufe nach einer vorteilhaften Ausgestaltung Kreiselpumpen verwendet werden, bei denen der Kreisel durch ein außerhalb des Pumpengehäuses erzeugtes Magnetfeld angetrieben wird, hierdurch werden Dichtungsprobleme vermieden.

Radiometrische Messungen werden in Glashütten und Polierbetrieben auch seit langem als Füllstands- und Dichtemessungen eingesetzt und haben sich unter den dort herrschenden Einsatzbedingungen, die vergleichbar mit den hier herrschenden Einsatzbedingungen sind, bestens bewährt.

Die eingesetzten Komponenten, insbesondere die Meßeinrichtung kann unmittelbar neben dem Pufferbehälter aufgebaut werden, dadurch ist gewährleistet, daß die Temperatur der Säure, der das Vergleichsmuster ausgesetzt ist, identisch ist mit der Temperatur der Säure bzw. des Säuregemisches im Polierbadbehälter. Selbst wenn bei einer eventuellen Störung der Heizungsanlage für den Pufferbehälter die Säuretemperatur absinken würde, wäre eine einwandfreie Funktion noch gewährleistet, da der Glasabtrag sowohl am Poliergut, als auch am Vergleichsmuster gleichermaßen verringert würde. Bei einer solchen Situation würde jedoch automatisch die Regelung veranlassen, daß die Säurekonzentration wieder so weit angehoben wird, bis der Istwert des Glasabtrages wieder den vorgegebenen Sollwert erreicht.

Weitere Ausgestaltungen des erfindungsgemäßen Verfahrens und der erfindungsgemäßen Vorrichtung sind weiteren Unteransprüchen zu entnehmen.

Ein Ausführungsbeispiel der erfindungsgemäßen Vorrichtung zur Durchführung des Verfahrens wird nun anhand von Zeichnungen näher erläutert, es zeigen:

| Figur 1: | Ein Blockschaltbild der erfindungsgemäßen Vorrichtung, |
|---|---|
| Figur 2: | eine Seitenansicht einer bevorzugten Ausführungsform der Meßzelle, eingebaut im Kreislauf K2, |
| Figur 3: | einen Längsschnitt durch die Meßzelle der Fig. 2, |
| Figur 4: | einen Querschnitt durch das Rohrstück der Meßzelle in der Ebene IV-IV der Figur 3, |
| Figur 5: | Tabellen und Funktionen zur Erläuterung des erfindungsgemäßen Verfahrens. |

Die in Figur 1 schematisch anhand eines Blockschaltbildes dargestellte Vorrichtung beinhaltet einen Polierbadbehälter 10, einen Pufferbehälter 20 und einen Flußsäurebehälter 30. Mit Hilfe einer ersten Pumpe P1 wird zwischen dem Polierbadbehälter 10 und dem Pufferbehälter 20 ein erster Kreislauf K1 der unter der Arbeitstemperatur befindlichen Poliersäure etabliert, d.h. dem im Polierbadbehälter eingesetzten Säuregemisch, wobei als Poliermittel insbesondere Flußsäure in einer Konzentration von 1 Gew.-% bis 10 Gew.-% Verwendung findet, neben 60 Gew.-% bis 70 Gew.-% Schwefelsäure und Wasser.

Im Polierbadbehälter wird in bekannter Art und Weise das zu polierende Glasstück bewegt, so daß nach Ablauf einer bestimmten Zeitspanne ein bestimmter Oberflächenabtrag durch die Einwirkung des Säuregemisches erzielt wird. Während dieses Vorganges reduziert sich in der Regel der Anteil der Flußsäure im Säuregemisch, so daß von Zeit zu Zeit konzentrierte Flußsäure aus dem Flußsäurebehälter 30 mittels einer Dosierpumpe DP nachgeführt werden muß. Von Bedeutung ist, daß die Temperatur und die Konzentration der Poliersäure im Polierbadbehälter 10 und dem Pufferbehälter 20 durch den Kreislauf K1 jederzeit übereinstimmen, so daß die im Pufferbehälter 20 befindliche Poliersäure repräsentativ ist für die im Polierbadbehälter 10 wirkende Poliersäure.

Vom Pufferbehälter 20 geht ein zweiter Kreislauf K2 aus, bei dem mit Hilfe einer zweiten Pumpe P2 über eine Meßzelle 50 Poliersäure aus dem Pufferbehälter die Meßzelle 50 durchströmt, in der ein Vergleichsmuster einer Glasplatte sich befindet, das in seinen Materialeigenschaften dem aktuell zu behandelnden Glasmuster im Polierbadbehälter 10 entspricht. Die in der Meßzelle 50 ablaufenden Poliervorgänge am dortigen Vergleichsmuster infolge der Einwirkung der Poliersäure simulieren folglich die im Polierbadbehälter 10 herrschenden Verhältnisse dynamisch, d.h., der Zustand sowohl der Poliersäure als auch des Vergleichsmusters in der Meßzelle 50 entsprechen denen im Polierbadbehälter 10, wenn während der Einwirkungszeit der Poliersäure im Polierbadbehälter 10 die beiden Kreisläufe K1 und K2 aktiviert sind.

Das Vergleichsmuster ist in der Meßzelle 50 so angeordnet, daß es einer Dickenmessung zugänglich ist; beim Ausführungsbeispiel befindet sich auf der einen Seite eine radioaktive Strahlenquelle, die senkrecht auf die Oberfläche des Vergleichsmusters einstrahlt und auf der gegenüberliegenden Seite ein geeigneter Detektor, z.B. ein Szintillationszähler, der die durchtretende Strahlung registriert und die entsprechenden Impulsraten I anzeigt.

Der Meßzelle 50 ist eine Regeleinheit 40 zugeordnet, der diese Impulsraten I zugeführt werden. Aus dem Vergleich der aktuellen Zählraten I mit vorgegebenen Sollwerten oder vorgegebenen Eichkurven errechnet die Regeleinheit ein Stellsignal für die Dosierpumpe DP und steuert somit die Zugabe von konzentrierter Flußsäure aus dem Flußsäurebehälter 30 in den Kreislauf K1 und damit in den Polierbadbehälter 10.

Die beschriebene Anordnung beruht auf folgenden Überlegungen, die ihren Niederschlag in dem erfindungsgemäßen Verfahren gefunden haben:

Beim Durchpumpen der Poliersäure durch die Meßzelle 50 wird Glas vom Vergleichsmuster abgetragen. Dadurch vermindert sich die Dicke der Vergleichsmuster-Platte, wobei der Glasabtrag umso größer ist, je länger das Vergleichsmuster der Säure ausgesetzt ist und je höher die Säurekonzentration ist (diese Änderungen verlaufen sozusagen "synchron" mit den entsprechenden Änderungen im Polierbadbehälter 10, wie oben erläutert). Die Dicke des Vergleichsmusters und damit auch die Dicke der Glasplatte im Polierbadbehälter wird durch die Bestimmung der Absorption im beschriebenen Ausführungsbeispiel (auch eine Bestimmung durch Reflexion ist möglich) der von der Strahlenquelle emittierten Strahlung im Vergleichsmuster ermittelt. Die Strahlungsintensität wird dabei vor und nach dem Durchpumpen der Säure durch die Meßzelle 50 während einer vorgebbaren Zeitspanne T ermittelt. Ist die hierbei gemessene Zählratenänderung zu klein gegenüber einem vorgegebenen Sollwert, so bedeutet dies, daß die Dickenänderung des Vergleichsmusters zu gering und folglich (bei gleichen anderen Betriebsparametern) die Konzentration der Flußsäure im Polierbad zu gering ist. Die aus der Zählratendifferenz gewonnene Information kann dann zur Gewinnung des Stellsignals herangezogen werden, das der Dosierpumpe DP dann übermittelt wird, die unter Berücksichtigung von deren Betriebsparametern eine definierte Menge konzentrierter Flußsäure vom Flußsäurebehälter 30 in den Pufferbehälter 20 pumpt und somit die Flußsäurekonzentration im Kreislauf K1 auf einen Wert erhöht, von dem nach den vorliegenden Eichwerten und Sollwerten anzunehmen ist, daß er den Glasabtrag entsprechend erhöht.

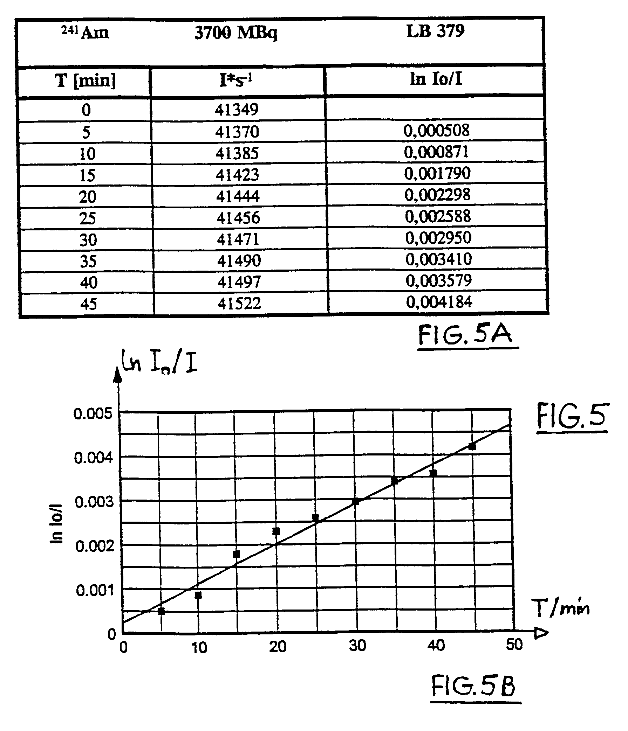

Zur Verdeutlichung sind in Figur 5 einige Meßtabellen und Eichkurven dargestellt, die durch Einwirkung von Poliersäure mit einer Anfangskonzentration von 2 Gew.-% Flußsäure auf eine 1,6 mm dicke Glasplatte während einer Einwirkdauer von jeweils 5 Minuten gemessen wurden. Nach diesen 5 Minuten (Figur 5A) wurde diese Glasplatte mit Hilfe eines Meßgerätes vom Typ "LB 379" der Firma EG & G Laboratorium Prof. Dr. Rudolf Berthold GmbH & Co. KG in Bad Wildbad gemessen, das mit einer 3700 MBq $^{241}$Am Strahlungsquelle bestückt war. Die vom zugehörigen Szintillationszähler auf der anderen Seite der Glasplatte registrierten Impulse wurden gezählt, die Ergebnisse einer solchen Messung sind tabellarisch in Figur 5A zusammengefaßt und in Figur 5B die daraus gewonnene Eichkurve dargestellt.

Man erkennt aus Figur 5A, daß bei einer Polierbadtemperatur TA im Bereich zwischen 59 und 64°C während einer Gesamteinwirkungsdauer von 45 Minuten des Polierbades auf die Glasplatte die in Abständen von 5 Minuten gewonnenen Meßpunkte zu dem in Figur 5B dargestellten, innerhalb statistischer Schwankungen linearen Zusammenhang zwischen dem ln $I_0$/I und der Einwirkungszeit T in Minuten führen. Da der Glasabtrag als solcher ebenfalls proportional zur Einwirkungszeit der Poliersäure ist, ergibt sich hieraus, daß die Messung der Absorption radioaktiver Strahlung (ln $I_0$/I) ein geeignetes Mittel ist, den Glasabtrag durch die Poliersäure durch Messung der verbleibenden Glasdicke zu bestimmen. Legt man folgende Werte zugrunde:

$$\rho_{Glas} = 2{,}7 \text{ g/cm}^3$$

$$\mu_{Glas} = 0{,}22 \text{ cm}^2/\text{g},$$

errechnet sich mit Hilfe der Gleichung

$$I = I_0 e^{-\mu\rho x}$$

aus den in Figur 5A dargestellten Impulsraten eine Abnahme der Glasdicke von rund 0,07 mm über 45 Minuten.

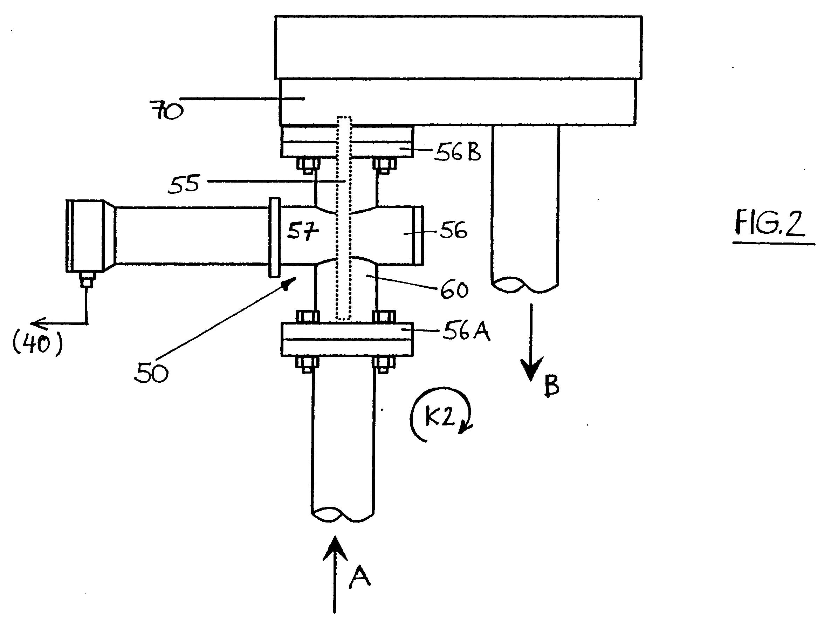

Figur 2 zeigt eine Seitenansicht der Meßzelle 50 im Kreislauf K2. In die den Kreislauf K2 bildende Rohrleitung ist ein Rohrstück 60 mittels Flansche 56A,56B eingesetzt, so daß die Poliersäure in Richtung A in die Meßzelle 50 einströmen kann, dabei die Glasplatte 55 umströmt und über einen Überlaufkasten 70 wieder zum Pufferbehälter 20 (Pfeil B) zurückströmt.

Die Meßeinrichtung der Meßzelle 50 ist in Form eines Rohres ausgeführt, derart, daß auf der einen Seite des Rohrstückes 60 eine Strahlungsquelle 56 angeordnet ist, auf der gegenüberliegenden Seite ein Detektor (Szintillationszähler) 57 zur Registrierung der die Glasplatte 55 durchsetzenden γ-Strahlung.

Das elektrische Signal des Szintillationszählers wird dann zur Auswertung der Regeleinheit 40 zugeleitet.

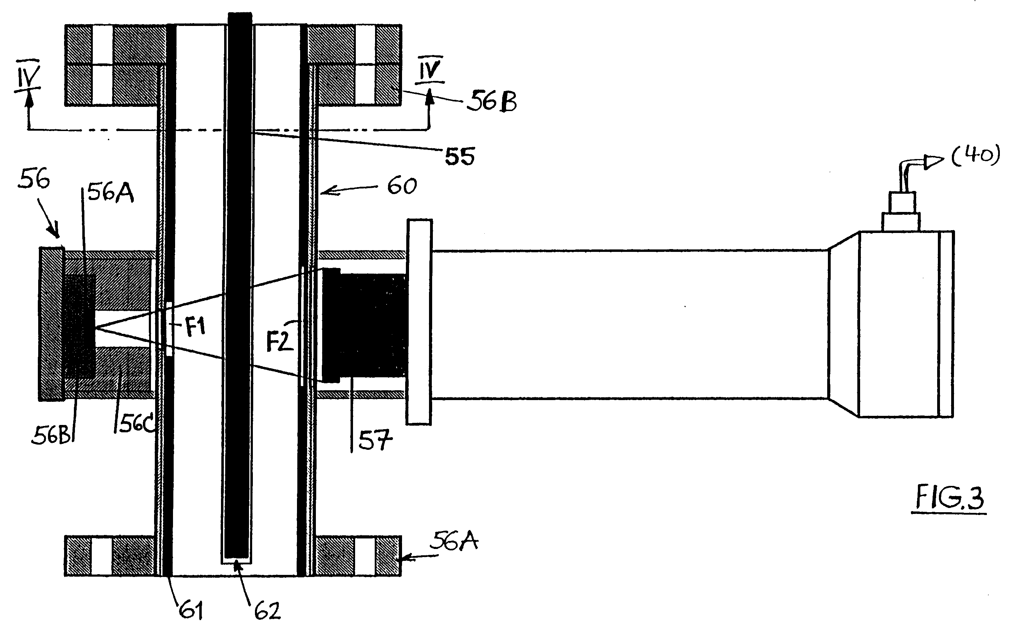

Figur 3 zeigt das Rohrstück 60 im Längsschnitt. Das Rohrstück 60 besteht aus mindestens einem Außenmantel und einem Innenrohr 61 (beispielsweise aus Propylen), in das zwei diametral gegenüberliegende Nuten 62,63 eingebracht sind. Nach Abnahme des Deckels des Überlaufkastens 70 kann die entsprechend dimensionierte Glasplatte 55 vertikal schubladen- oder schlittenähnlich, geführt von den beiden Nuten 62,63, in das Rohrstück 60 eingelassen werden, bis sie auf der unteren Stirnfläche dieser Nuten aufsitzt und somit gehalten ist.

Die Außenwandung des Rohr-stücks 60 weist ebenfalls diametral gegenüberliegend, jedoch um 90° gegenüber den Nuten 62,63 versetzt, Fenster F1,F2 auf, die den Durchgang radioaktiver Strahlung, beispielsweise γ-Strahlung, gestatten.

Vor dem Fenster F1 befindet sich eine γ-Strahlenquelle 56, mit dem eigentlichen Strahler 56A (beispielsweise ein $^{241}$Am-Präparat), umgeben von einer Abschirmung 56B und einem Kollimator 56C. Die Dimensionierung des Kollimators 56C definiert folglich einen bestimmten Raumwinkel, unter dem die γ-Strahlung der Strahlenquelle 56A abgegeben wird. Das entsprechend größer ausgebildete Fenster F2 auf der gegenüberliegenden Seite des Rohrstückes 60 liegt vor der Nachweisfläche des Detektors 57, beispielsweise eines Szintillationszählers. Die γ-Strahlung der Strahlenquelle 56A tritt demnach durch die Glasplatte 55 und wird vom Detektor 57 registriert. Die registrierte Zählrate ist folglich ein Maß für die Absorption der γ-Strahlung durch die Glasplatte 55; dementsprechend ist die Zählratenänderung ein direktes Maß für die Dickenänderung der Glasplatte 55, hervorgerufen durch die Wirkung der vorbeiströmenden Poliersäure.

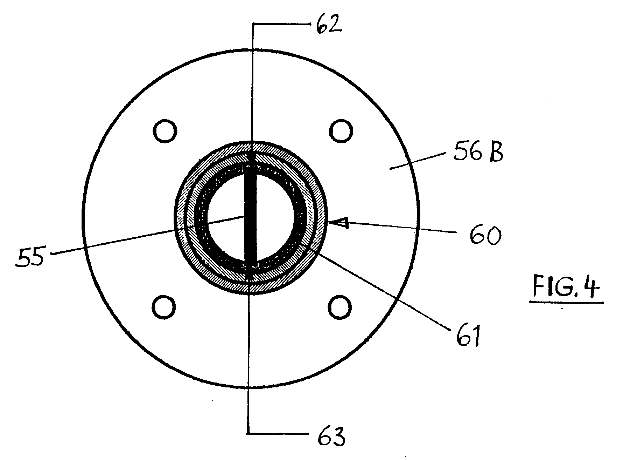

Figur 4 zeigt einen Querschnitt durch das Rohrstück 60 in der Ebene IV-IV der Figur 3, man erkennt, daß beim dargestellten Ausführungsbeispiel das Rohrstück 60 dreilagig ausgeführt ist, die Innenseite bildet das Innenrohr 61, in dem die Glasplatte 55 gehalten ist, umgeben von dem zweischichtigen Außenrohr, das beispielsweise aus Polypropylen besteht.

## Patentansprüche

1. Verfahren zum Polieren oder Mattieren von Glasflächen in einem Säurebad (Polierbad) mit Flußsäure als aktiver Komponente, mit Hilfe eines Vergleichsmusters, dessen Eigenschaften dem im Polierbad befindlichen Glas entspricht, und auf das die im Polierbad aktuell wirkende Flußsäure einwirkt, wobei die Abtragswirkung der Flußsäure auf das Vergleichsglasmuster gemessen (Referenzmessung) und mit Hilfe dieses Meßwertes und vorgegebenen Sollwerten die Säurekonzentration im Polierbad geregelt wird, dadurch gekennzeichnet, daß als Vergleichsmuster eine Glasplatte (55) verwendet wird, und daß zur Bestimmung der Abtragswirkung innerhalb einer vorgebbaren Zeitspanne (T) eine Dickenmessung am Anfang und Ende dieser Zeitspanne (T) durchgeführt wird.

2. Verfahren nach Anspruch 1, gekennzeichnet durch folgende Verfahrungsschritte:

   a) Zur Referenzmessung wird das aktuell wirkende Säuregemisch in eine Meßzelle (50) mit der darin gehaltenen Glasplatte (55) gepumpt,
   b) nach der Einwirkung werden die Meßzelle (50) und die Glasplatte (55) gespült,
   c) die Meßzelle (50) wird entleert,
   d) die Dickenmessung wird durchgeführt.

3. Verfahren nach Anspruch 1 oder 2, dadurch gekennzeichnet, daß die Dickenmessung radiometrisch erfolgt.

4. Vorrichtung zur Durchführung des Verfahrens nach Anspruch 1, mit einem Polierbadbehälter (10), einer Pumpe (P1) zur Zuführung von konzentrierter Flußsäure aus einem Flußsäurebehälter (30), einer Regeleinheit (40) zur Steuerung der Zufuhr konzentrierter Flußsäure aus dem Flußsäurebehälter (30) und einem Detektor (57) zur Gewinnung eines Meßwertes zur Eingabe in die Regeleinheit (40), dadurch gekennzeichnet, daß dem Polierbadbehälter (10) über einen ersten Kreislauf (K1) ein Pufferbehälter (20) zugeordnet ist, derart, daß das im Polierbadbehälter (10) aktuell wirkende Säuregemisch (Poliersäure) auch im Pufferbehälter (20) vorhanden ist, daß die Meßzelle (50) über einen zweiten Kreislauf (K2) vom Pufferbehälter (20) beschickbar ist, und daß an der Meßzelle (50) eine Meßeinrichtung mit dem Detektor (57) zur Dickenmessung angeordnet ist.

5. Vorrichtung nach Anspruch 3, dadurch gekennzeichnet, daß die in den Kreisläufen (K1,K2) verwendeten Pumpen (P1,P2) magnetfeldbetriebene Kreiselpumpen sind.

6. Vorrichtung nach Anspruch 4, dadurch gekennzeichnet, daß die Meßeinrichtung eine $\gamma$-Strahlenquelle (56) beinhaltet, deren Intensität nach Passieren der Glasplatte (55) der Detektor (57) mißt.

7. Vorrichtung nach Anspruch 6, dadurch gekennzeichnet, daß die $\gamma$-Strahlenquelle (56) ein $^{241}$Am-Präparat ist.

8. Vorrichtung nach Anspruch 6, dadurch gekennzeichnet, daß die $\gamma$-Strahlenquelle (56) ein $^{244}$Cm-Präparat ist.

9. Vorrichtung nach Anspruch 4, dadurch gekennzeichnet, daß die Meßeinrichtung eine Röntgenröhre beinhaltet.

10. Vorrichtung nach Anspruch 6, dadurch gekennzeichnet, daß die Meßeinrichtung ein Rohrstück (60) beinhaltet, in das die Glasplatte (55) axial einschiebbar ist, derart, daß sie im Strahlengang zwischen $\gamma$-Strahlenquelle (56) und Detektor (57) gehalten ist.

11. Vorrichtung nach Anspruch 10, dadurch gekennzeichnet, daß die $\gamma$-Strahlenquelle (56) und Detektor (57) beidseitig des Rohrstückes (60) derart angeordnet sind, daß der Strahlengang im wesentlichen senkrecht zur Glasplatte (55) verläuft.

12. Vorrichtung nach Anspruch 10, dadurch gekennzeichnet, daß das Rohrstück (60) ein Innenrohr (61) mit zwei gegenüberliegenden, axial verlaufenden Nuten (62,63) aufweist, in das die Glasplatte (55) schlittenartig einschiebbar ist.

## Claims

1. Method of polishing or delustering glass surfaces in an acid bath (polishing bath) with hydrofluoric acid as an active component, with the aid of a comparative sample, whose properties correspond to the glass located in the polishing bath, and upon which the hydrofluoric acid at present acting in the polishing bath acts, the removal effect of the hydrofluoric acid on the comparative sample being measured (reference measurement) and the acid concentration in the polishing bath being regulated with the aid of this measurement value and predetermined required values, characterised in that there is used as a comparative sample a glass plate (55), and in that, in order to determine the removal effect within a predeterminable time period (T), a thickness measurement is carried out at the beginning and at the end of this time period (T).

**2.** Method according to Claim 1, characterised by the following process steps:

   a) for reference measurement, the acid mixture at present in action is pumped into a measuring head (50) with the glass plate (55) contained therein,

   b) after the action, the measuring head (50) and the glass plate (55) are rinsed,

   c) the measuring head (50) is emptied,

   d) the thickness measurement is carried out.

**3.** Method according to Claim 1 or 2, characterised in that the thickness measurement is carried out radiometrically.

**4.** Device for carrying out the method according to Claim 1, with a polishing bath container (10), a pump (P1) for supplying concentrated hydrofluoric acid from a hydrofluoric acid container (30), a regulating unit (40) for controlling the supply of concentrated hydrofluoric acid from the hydrofluoric acid container (30), and a detector (57) for obtaining a measurement value for input into the regulating unit (40), characterised in that there is associated with the polishing bath container (10) via a first circuit (K1), a buffer container (20), in such a way that the acid mixture (polishing acid) at present in action in the polishing bath container (10) is also present in the buffer container (20), in that the measuring head (50) may be supplied via a second circuit (K2) from the buffer container (20), and in that there is disposed at the measuring head (50) a measuring device with the detector (57) for thickness measurement.

**5.** Device according to Claim 3, characterised in that the pumps (P1, P2) used in the circuits (K1, K2) are centrifugal pumps driven by magnetic fields.

**6.** Device according to Claim 4, characterised in that the measuring device includes a δ radiation source (56) whose intensity is measured by the detector (57) after passing through the glass plate (55).

**7.** Device according to Claim 6, characterised in that the δ radiation source (56) is a $^{241}$Am-preparation.

**8.** Device according to Claim 6, characterised in that the δ radiation source (56) is a $^{244}$Cm-preparation.

**9.** Device according to Claim 4, characterised in that the measuring device includes an X-ray tube.

**10.** Device according to Claim 6, characterised in that the measuring device includes a nozzle (60) into which the glass plate (55) may be pushed axially, in such a way that it is held in the beam path between the δ radiation source (56) and detector (57).

**11.** Device according to Claim 10, characterised in that the δ radiation source (56) and detector (57) are disposed on either side of the nozzle (60) in such a way that the beam path extends substantially vertically to the glass plate (55).

**12.** Device according to Claim 10, characterised in that the nozzle (60) has an inner tube (61) with two diametrically opposed, axially extending grooves (62, 63) into which the glass plate (55) may be inserted in the manner of a slide.

**Revendications**

**1.** Procédé de polissage ou de matage de surfaces de verre dans un bain acide (bain de polissage) contenant de l'acide fluorhydrique comme constituant actif, à l'aide d'un échantillon de référence dont les propriétés correspondent à celles du verre se trouvant dans le bain de polissage, et sur lequel agit l'acide fluorhydrique agissant actuellement dans le bain de polissage, l'effet d'enlèvement produit par l'acide fluorhydrique sur l'échantillon de verre de référence étant mesuré (mesure de référence) et la concentration d'acide dans le bain de polissage étant réglée à l'aide de la valeur mesurée et de valeurs prescrites, caractérisé par le fait que comme échantillon de référence est utilisée une plaque de verre (55), et que pour la détermination de l'effet d'enlèvement pendant une durée (T) pouvant être fixée à l'avance, une mesure d'épaisseur est effectuée au début et à la fin de cette durée (T).

**2.** Procédé selon la revendication 1, caractérisé par les étapes suivantes :

   a) pour la mesure de référence, le mélange d'acides agissant actuellement est pompé dans une cellule de mesure (50) dans laquelle est fixée la plaque de verre (55),

   b) après l'action, la cellule de mesure (50) et la plaque de verre (55) sont rincées,

   c) la cellule de mesure (50) est vidée,

   d) la mesure d'épaisseur est effectuée.

**3.** Procédé selon l'une des revendications 1 et 2, caractérisé par le fait que la mesure d'épaisseur est effectuée par radiométrie.

**4.** Appareil pour la mise en oeuvre du procédé selon la revendication 1, comportant un récipient à bain de polissage (10), une pompe (P1) pour l'apport d'acide fluorhydrique concentré à partir d'un récipient à acide fluorhydrique (30), un dispositif de régulation (40) pour la commande de l'apport d'acide fluorhydrique concentré à partir du récipient à acide fluorhydrique (30), et un détecteur (57) pour l'obtention d'une valeur mesurée destinée à être introduite dans le dispositif de régulation (40), caractérisé par le fait qu'un récipient tampon (20) est associé au récipient à bain de polissage (10) par l'intermédiaire d'un premier circuit (K1) de façon telle que le mélange d'acides (acide de polissage) agissant actuellement dans le récipient à bain de polissage (10) soit aussi présent dans le récipient tampon (20), que la cellule de mesure (50) peut être chargée par le récipient tampon (20) par l'intermédiaire d'un deuxième circuit (K2), et que sur la cellule de mesure (50) est monté un dispositif de mesure comportant le détecteur (57) pour la mesure de l'épaisseur.

5. Appareil selon la revendication 3, caractérisé par le fait que les pompes (P1, P2) utilisées dans les circuits (K1, K2) sont des pompes centrifuges actionnées par un champ magnétique.

6. Appareil selon la revendication 4, caractérisé par le fait que le dispositif de mesure contient une source de rayonnement $\gamma$ (56), et le détecteur (57) mesure l'intensité du rayonnement $\gamma$ après traversée de la plaque de verre (55).

7. Appareil selon la revendication 6, caractérisé par le fait que la source de rayonnement $\gamma$ (56) est une préparation de $^{241}$Am.

8. Appareil selon la revendication 6, caractérisé par le fait que la source de rayonnement $\gamma$ (56) est une préparation de $^{244}$Cm.

9. Appareil selon la revendication 4, caractérisé par le fait que le dispositif de mesure contient un tube à rayons X.

10. Appareil selon la revendication 6, caractérisé par le fait que le dispositif de mesure contient un morceau de tuyau (60) dans lequel la plaque de verre (55) peut être introduite axialement de façon telle qu'elle soit fixée sur le trajet des rayons entre la source de rayonnement $\gamma$ (56) et le détecteur (57).

11. Appareil selon la revendication 10, caractérisé par le fait que la source de rayonnement $\gamma$ (56) et le détecteur (57) sont placés de part et d'autre du morceau de tuyau (60) de façon telle que le trajet des rayons soit sensiblement perpendiculaire à la plaque de verre (55).

12. Appareil selon la revendication 10, caractérisé par le fait que le morceau de tuyau (60) présente un tuyau intérieur (61) ayant deux rainures axiales opposées (62, 63) dans lequel la plaque de verre (55) peut être introduite à la manière d'un coulisseau.

FIG.1

FIG.2

EP 0 668 251 B1

*FIG.3*

FIG.4

EP 0 668 251 B1

| $^{241}$Am | 3700 MBq | LB 379 |
|---|---|---|
| T [min] | $I*s^{-1}$ | ln Io/I |
| 0 | 41349 | |
| 5 | 41370 | 0,000508 |
| 10 | 41385 | 0,000871 |
| 15 | 41423 | 0,001790 |
| 20 | 41444 | 0,002298 |
| 25 | 41456 | 0,002588 |
| 30 | 41471 | 0,002950 |
| 35 | 41490 | 0,003410 |
| 40 | 41497 | 0,003579 |
| 45 | 41522 | 0,004184 |

FIG.5A

FIG.5

FIG.5B